# EUROPÄISCHE PATENTANMELDUNG

(11) **EP 4 414 153 A1**
(43) Veröffentlichungstag der Anmeldung: **14.08.2024**
(21) Anmeldenummer: 23155388.4
(22) Anmeldetag: 07.02.2023
(51) Int. Cl.: B29C 48/30, B29C 48/00, A23P 30/20, B29C 48/87, A23J 3/22, A23J 3/26

(54) **BLENDE FÜR EXTRUDER**

(71) Anmelder: Bühler AG, 9240 Uzwil (CH)
(72) Erfinder: Kern, Christian, 70567 Stuttgart (DE); Mitchell, William Robert, 8050 Zürich (CH)
(74) Vertreter: Hepp Wenger Ryffel AG

(57) **Zusammenfassung**

Die vorliegende Erfindung betrifft eine Blende (1) für ein Kühlwerkzeug (5) eines Nahrungs- bzw. Futtermittelextruders (3), wobei die Blende (1) in ihrer Oberfläche offene Bereiche (2) aufweist, durch welche ein Extrudat durch die Blende (1) hindurch treten kann, dadurch gekennzeichnet, dass die offenen Bereiche (2) 10-50%, vorzugsweise 15-40%, der Oberfläche der Blende (1) einnehmen. Die vorliegende Erfindung betrifft weiterhin ein Kühlwerkzeug (5) für einen Nahrungs- bzw. Futtermittelextruder (3) mit einer erfindungsgemässen Blende (1), einen Nahrungs- bzw. Futtermittelextruder (3), umfassend ein derartiges Kühlwerkzeug (5), sowie ein Verfahren zur Herstellung von proteinhaltigen Lebensmitteln mit diesem Extruder (3), und das Extrudat.

## Beschreibung

Die vorliegende Erfindung betrifft eine Blende für ein Kühlwerkzeug eines Nahrungs- bzw. Futtermittelextruders.

Verschiedene Nahrungsmittel werden heutzutage durch Extrusionsverfahren hergestellt. Beispielsweise können innovative Lebensmittel, wie z. B. Produkte, welche die Eigenschaften von Fleisch und Fisch und deren Rolle in der Ernährung imitieren, auf pflanzlichen Proteinen basieren und im Rahmen des Nachhaltigkeitstrends immer wichtiger werden, durch Extrusion einer geeigneten Ausgangszusammensetzung unter bestimmten Extrusionsbedingungen hergestellt werden.

Bei der Extrusion von Nahrungsmitteln und/oder der Extrusion von Futtermitteln für Tiere erfolgt häufig eine sogenannte Nasstexturierung, bei der sich faserartige Strukturen ausbilden. Eine gezielte faserartige Struktur ist nicht einfach zu erreichen, da ein Extrudat am Ausgang des Extruders typischerweise expandiert, was einer dichten, kompakten, faserartigen Produktstruktur abträglich ist. Daher werden für solche Zwecke im Stand der Technik Kühlwerkzeuge wie Kühldüsen verwendet, die am Ausgang des Extruders angeordnet sind und die Expansion des Extrudats reduzieren oder, falls gewünscht, auch weitestgehend vollständig unterdrücken sollen.

In der EP-3 524 059 B1 ist ein Kühlwerkzeug beschrieben, welches hervorragende Kühleigenschaften gewährleisten kann und dabei einfach aufgebaut und leicht zu reinigen ist. Insbesondere weist dieses Kühlwerkzeug einen Extrudatströmungskanal in Form eines Ringausschnitts auf. Die Aussenwand des Extrudatströmungskanals ist mindestens aus einem ersten Segment und einem zweiten Segment ausgebildet, wobei das erste Segment und das zweite Segment über mechanische Verbindungselemente miteinander verbunden sind. Diese Segmente können verschwenkt werden, wodurch das Innere des Extrusionsströmungskanals zugänglich wird.

Zum anderen sind flach ausgebildete Kühlwerkzeuge bekannt, beispielsweise aus der US-4,910,040, WO 96/36242, WO 99/13735 und EP-1 059 040 A1.

Es ist weiterhin bekannt, im Bereich des Einlassendes eines solchen Kühlwerkzeugs einen Verteiler anzuordnen, mit welchem das Extrudat vom Austrittskanal eines Nahrungs- bzw. Futtermittelextruders über einen einzigen Verteilkanal dem als Ringausschnitt ausgebildeten Extrudatströmungskanal zuführbar ist. Derartige Verteiler sind beispielsweise ebenfalls in der EP-3 524 059 B1 beschrieben.

Es ist weiterhin bekannt, im Bereich des dem Extruder abgewandten und/oder des dem Extruder zugewandten Endes des Verteilers eine Blende anzuordnen, mit welcher der Verteilkanal verengt werden kann. Mit derartigen Blenden können Produkteigenschaften, insbesondere die Faserigkeit, beeinflusst werden. Derartige Blenden sind allgemein in der EP-3 524 059 B1 beschrieben. Details zu Blenden sind jedoch nicht beschrieben.

Es war die Aufgabe der vorliegenden Erfindung, eine Möglichkeit bereitzustellen, mit welcher ein Extrudat mit gezielter Texturierung hergestellt werden kann.

Dies Aufgabe wird durch die vorliegende Erfindung gelöst.

Im Detail betrifft die vorliegende Erfindung eine Blende für ein Kühlwerkzeug eines Nahrungs- bzw. Futtermittelextruders, wobei die Blende in ihrer Oberfläche offene Bereiche aufweist, durch welche ein Extrudat durch die Blende hindurchtreten kann, dadurch gekennzeichnet, dass die offenen Bereiche 10-50%, vorzugsweise 15-40%, der Oberfläche der Blende einnehmen.

Es wurde erfindungsgemäss gefunden, dass ein definierter Zusammenhang zwischen den offenen Bereichen in der Oberfläche einer Blende für einen Nahrungs- bzw. Futtermittelextruder und der Härte und Textur eines extrudierten Produkts besteht. Durch eine gezielte Bereitstellung von offenen Bereichen in der Oberfläche der Blende kann ein Produkt mit gezielter Härte und Textur hergestellt werden.

Unter "Oberfläche" der Blende wird hierbei die Fläche der Blende mit dem grössten Flächeninhalt verstanden. Die erfindungsgemässe Blende besitzt eine gewisse Dicke und somit auch Seitenflächen, welche jedoch einen deutlich geringeren Flächeninhalt aufweisen und somit erfindungsgemäss nicht als Oberfläche der Blende angesehen werden.

Unter "offene Bereiche" der Blende werden Bereiche in der Oberfläche der Blende verstanden, welche nicht geschlossen sind, d.h. durch welche ein Material wie ein Extrudat aus einem Extruder von der einen Seite der Blende durch die Blende auf die andere Seite der Blende hindurchtreten kann.

Die erfindungsmässe Blende kann für einen Extruder vorgesehen sein, der ein Kühlwerkzeug, vorzugsweise eine Kühldüse, mit einem Extrudatströmungskanal in Form eines Ringausschnitts umfasst. In diesem Fall ist die Blende kreis- oder ringförmig.

Die erfindungsmässe Blende kann für einen Extruder vorgesehen sein, der ein flach ausgebildetes Kühlwerkzeug, vorzugsweise eine Kühldüse, umfasst. In diesem Fall ist die Blende vorzugsweise stadionförmig.

Unter "stadionförmig" wird eine Form verstanden, deren Umfang die Form einer Laufbahn eines Stadions für beispielsweise Leichtathletikwettbewerbe aufweist. Die Form hat einen viereckigen, vorzugsweise rechteckigen Zentralabschnitt, an welchen an zwei gegenüberliegenden Seiten, vorzugsweise den kürzeren Seiten eines Rechtecks, zwei Halbkreissegmente angeordnet sind.

Die erfindungsgemässe Blende weist vorzugsweise eine Dicke in Hauptströmungsrichtung im Bereich von 0.1 bis 1.0 cm, bevorzugter von 0.15 bis 0.9 cm, besonders bevorzugt von 0.2 bis 0.8 cm auf.

Die erfindungsgemässe Blende weist offene Bereiche auf. Die Form der offenen Bereiche ist nicht besonders eingeschränkt.

Gemäss einer bevorzugten Ausführungsform der vorliegenden Erfindung ist die Blende als Lochblende ausgebildet. Mit anderen Worten weist die Blende in ihrer Oberfläche Löcher auf, welche die offenen Bereiche darstellen.

Gemäss einer weiteren bevorzugten Ausführungsform der vorliegenden Erfindung ist die Blende als Blende mit segmentierten Schlitzen ausgebildet, die als Kreissegmente oder Ringsegmente ausgebildet sind. Hierbei können die Kreis- beziehungsweise Ringsegmente als Segmente eines einzigen Kreises oder Ringes oder als Segmente verschiedener Kreise oder Ringe ausgebildet sein.

Mit Lochblenden können vorzugsweise Strukturen erzeugt werden, die Rindfleisch ähneln. Mit Schlitzblenden können vorzugsweise Strukturen erzeugt werden, die Fisch oder Huhn ähneln. Der Einsatz der erfindungsmässen Blenden ist aber nicht auf die Extrusion alternativer Fleischprodukte eingeschränkt.

Die Blenden können als Metallringe oder -scheiben ausgebildet sein, welche ein definiertes Loch- oder Schlitzbild aufweisen. Es ist erfindungsgemäss bevorzugt, dass die Blende ein symmetrisches oder asymmetrisches Loch- oder Schlitzbild aufweist. Erfindungsgemäss bevorzugt ist die Blende aus lebensmittelechtem rostfreiem Edelstahl ausgebildet.

Das Loch- beziehungsweise Schlitzbild kann grundsätzlich in vielen Geometrien geformt sein. Bevorzugt sind gerade und gebogene Schlitze sowie Löcher. Möglich sind aber auch Sternformen, Kreuze, sowie ornamentale Formen. Gebogene Schlitze, insbesondere wie in den Ausführungsbeispielen ausgeführt, führen zu sehr langen Faserstrukturen mit hoher Widerstandskraft, während gerade Schlitze die Quervernetzung des Produkts fördern. Löcher wiederum trennen das Produkt in feinfaserige Filamente.

Das Produkt erreicht die Blende in der Regel in einem vortexturierten Zustand, sodass erste Fasern und Filamente bereits ausgebildet sein können. Die Blende sorgt für eine kurzzeitige Beschleunigung des Flusses, anschliessender Abbremsung beim Verlassen der Blende und damit verbundener Reorientierung bereits ausgebildeter Fasern oder Filamente.

Es wurde erfindungsgemäss gefunden, dass das Verhältnis der offenen Bereiche in der Oberfläche der Blende zur gesamten Oberfläche der Blende einen erheblichen Einfluss auf die Härte und Textur des durch die Blende tretenden Extrudats ausübt.

Mit einer Vergrösserung der offenen Bereiche in der Oberfläche der Blende wird eine zunehmende Härte des durch die Blende tretenden Extrudats erreicht.

Andererseits wird mit einer Verkleinerung der offenen Bereiche in der Oberfläche der Blende eine Auflockerung der Textur des durch die Blende tretenden Extrudats erreicht. Es wurde erfindungsgemäss gefunden, dass bei Extrusion durch eine erfindungsgemässe Blende das Extrudat eine Textur aufweist, welche einen Lockerungsgrad aufweist, der umgekehrt proportional zur Härte des Extrudats zunimmt.

Gemäss der vorliegenden Erfindung weist die Blende in ihrer Oberfläche offene Bereiche auf, durch welche ein Extrudat durch die Blende hindurchtreten kann, wobei die offenen Bereiche 10-50%, vorzugsweise 15-40%, der Oberfläche der Blende einnehmen.

Es hat sich gezeigt, dass mit den erfindungsgemässen Blenden ein Extrudat mit einer Härte im Bereich von 20 bis 30 N, bevorzugt 23 bis 27 N, hergestellt werden kann. Die erhältliche Textur kann neben der Härte zusätzlich durch das Loch- beziehungsweise Schlitzbild der Blende beeinflusst werden, wie vorstehend erläutert.

Es hat sich weiterhin gezeigt, dass mit den erfindungsgemässen Blenden eine spezifische Flussrate an Extrudat in Abhängigkeit vom Verhältnis der offenen Bereiche in der Oberfläche der Blende zur gesamten Oberfläche der Blende eingestellt werden kann. In Abhängigkeit von der Durchflussrate des Extruders kann erfindungsgemäss bevorzugt eine spezifische Flussrate im Bereich von 0,02 bis 2,5 kgh⁻¹mm⁻², vorzugsweise 0,03 bis 1,5 kgh⁻¹mm⁻², besonders bevorzugt 0,04 bis 0,5 kgh⁻¹mm⁻² durch die Blende eingestellt werden.

Die vorliegende Erfindung betrifft weiterhin ein Kühlwerkzeug für einen Nahrungs- bzw. Futtermittelextruder, vorzugsweise Kühldüse, mit einer Blende im Bereich eines Verteilkanals, wobei die Blende den Verteilkanal verengt, dadurch gekennzeichnet, dass es sich um eine Blende gemäss der vorliegenden Erfindung handelt. Kühlwerkzeuge für Extruder sind an sich bekannt, wie vorstehend bereits ausgeführt wurde.

Ein erfindungsgemässes Kühlwerkzeug für einen Nahrungs- oder Futtermittelextruder weist ein Einlassende auf, das an dem Extruder befestigbar ist, und durch welches Extrudat in das Kühlwerkzeug hineinführbar ist. Die Befestigung ist dabei vorzugsweise lösbar ausgestaltet, sodass das Kühlwerkzeug leicht ausgetauscht oder für Wartungs- oder Reinigungszwecke demontiert werden kann. Die Befestigung erfolgt vorzugsweise mit Schrauben (beispielsweise Sechskantschrauben), Klemmhebeln oder Spannverschlüssen, mit denen in an sich üblicher Art und Weise eine definierte Anpresskraft erzielbar ist.

Das Kühlwerkzeug weist ferner ein Auslassende auf, durch welches gekühltes Extrudat abführbar ist. Im Bereich des Auslassendes kann eine Konfektionierung des gekühlten Extrudats erfolgen, wie nachfolgend noch erläutert wird.

Zwischen dem Einlassende und dem Auslassende des Kühlwerkzeugs erstreckt sich ein, insbesondere ein einziger, Extrudatströmungskanal.

Der Extrudatströmungskanal kann gemäss einer bevorzugten Ausführungsform im Wesentlichen als Ringausschnitt ausgebildet sein. Der Ring des Ringausschnitts kann insbesondere kreisförmig, oval, polygonal, als spline-Kurve oder auch aus Kombinationen davon gebildet sein. Bevorzugt ist eine Ausbildung des Ringausschnitts als Kreisringausschnitt.

Der Extrudatströmungskanal kann gemäss einer bevorzugten Ausführungsform im Wesentlichen als viereckiger, vorzugsweise rechteckiger Spalt ausgebildet sein.

Ferner weist das Kühlwerkzeug mindestens einen Kühlmittelströmungskanal auf, mit dem der Extrudatströmungskanal in Wärmeübertragungsverbindung steht. Die Wärmeübertragung findet vorzugsweise als Wärmeübergang durch Konvektion statt.

Ein erfindungsgemäss bevorzugtes Kühlwerkzeug ist in der EP-3 524 059 B1 beschrieben. Dieses Kühlwerkzeug weist einen Extrudatströmungskanal in Form eines Ringausschnitts auf. Die Aussenwand des Extrudatströmungskanals ist mindestens aus einem ersten Segment und einem zweiten Segment ausgebildet, wobei das erste Segment und das zweite Segment über mechanische Verbindungselemente miteinander verbunden sind. Diese Segmente können verschwenkt werden, wodurch das Innere des Extrusionsströmungskanals zugänglich wird.

Mit einem derartigen Kühlwerkzeug können Kapazitäten im Bereich von 125 bis 2000 kg/h (bevorzugt 175 bis 1500 kg/h, besonders bevorzugt 225 bis 1000 kg/h) Extrudat bei nur geringer Baugrösse des Kühlwerkzeugs mit einer typischen Länge von 0.5 bis 2.5 m (bevorzugt 0.75 bis 2.25 m, besonders bevorzugt 1 bis 2 m) und einem Durchmesser von 100 bis 800 mm (bevorzugt 200 bis 600 mm, besonders bevorzugt 300 bis 400 mm) realisiert werden.

Das Kühlwerkzeug ist in den Bereichen, die mit dem Nahrungs- oder Futtermittel in Kontakt kommen, also insbesondere dem Extrudatströmungskanal, aus rostfreiem Edelstahl ausgebildet.

Diese Materialien zeichnen sich durch hochgradige Lebensmittelechtheit aus. Die Rauigkeit bevorzugter Materialien liegt im Bereich von Ra 1.6 bis Ra 0.8 (gemäss DIN EN ISO 4287:1998).

In bevorzugten Ausführungsformen des Kühlwerkzeugs mit Extrudatströmungskanal in Form eines Ringausschnitts ist die Innenwand des Extrudatströmungskanals im Wesentlichen zylindrisch, insbesondere hohlzylindrisch, ausgebildet. Derartige Ausbildungen sind fertigungstechnisch besonders einfach herstellbar. Ganz besonders bevorzugt ist die Innenwand des Extrudatströmungskanals einstückig ausgebildet. Hierdurch sind eine einfache Fertigung und gute Reinigung gewährleistet.

Bevorzugt ist bei der Ausführungsform des Kühlwerkzeugs mit Extrudatströmungskanal in Form eines Ringausschnitts mindestens ein Kühlmittelströmungskanal, welcher mit dem Extrudatströmungskanal in Wärmeübertragungsverbindung steht, auf der Innenseite des Extrudatströmungskanals; und/oder auf der Aussenseite des Extrudatströmungskanals vorhanden. Auf der Innenseite des Extrudatströmungskanals ist der Kühlmittelströmungskanal vorzugsweise spiralförmig vollständig umlaufend ausgebildet. Auf der Aussenseite des Extrudatströmungskanals sind die Kühlmittelströmungskanäle in beiden Segmenten vorzugsweise jeweils mäanderförmig in ausgebildet. Der oder die Kühlmittelströmungskanäle sind vorzugsweise komplett geschlossen, vorzugsweise verschweisst, und auch bei der Demontage zu Austausch- oder Wartungszwecken nur über die Ein- und Ausgänge für das Kühlmittel zugänglich. Hierdurch können Produktkontaminierungen konstruktiv einfach vermieden werden. Die Ein- und Ausgänge können vorzugsweise als Stutzen ausgebildet sein und das Kühlmittel wird stromaufwärts, entgegen der Hauptströmungsrichtung des Produkts geführt.

Gemäss der vorliegenden Erfindung ist im Bereich des Einlassendes des Kühlwerkzeugs ein insbesondere austauschbarer Verteiler angeordnet. Der Verteiler ist derart ausgebildet, dass Extrudat vom (typischerweise nicht ringförmig oder als Ringausschnitt ausgebildeten) Austrittskanal eines Nahrungs- oder Futtermittelextruders über einen einzigen Verteilkanal dem vorzugsweise als Ringausschnitt ausgebildeten Extrudatströmungskanal zuführbar ist.

Vorzugsweise weist der Verteilkanal über mindestens 50%, vorzugsweise mindestens 70%, besonders bevorzugt mindestens 90% der Länge (vom Austritt des Extruders bis zum Eintritt in den Extrudatströmungskanal) eine konstante Querschnittsfläche auf. So kann eine gleichmässige Fliessgeschwindigkeit erzielt werden.

Besonders bevorzugt ist der Verteiler austauschbar ausgebildet, insbesondere bevorzugt kann er auf den Extruder aufgeschraubt werden.

Bevorzugterweise umfasst der Verteiler ein als Kegel ausgebildetes Verteilelement. Die Ausbildung als Kreiskegel ist besonders vorteilhaft. Auch die Ausbildung als Kegelstumpf, insbesondere als Kreiskegelstumpf ist möglich. Bei kegel- oder kreiskegelförmiger Ausbildung kann der Verteiler auch mit kugelabschnittsförmiger Spitze realisiert sein, wodurch sich das Strömungsverhalten gezielt beeinflussen und an das Extrudat anpassen lässt. Der Rückstaudruck in den Extruder und das Ausmass der Scherung des Produkts kann beeinflusst werden. Das Verteilelement ist vorzugsweise in einer Vertiefung eingesteckt und wird in dieser Vertiefung durch den Druck des gegen das Verteilelement strömenden Produkts in Position gehalten; die Austauschbarkeit ist auf diese Art und Weise besonders einfach realisiert.

In bevorzugten Ausführungsformen des Verteilers ist dieser mit einem oder mehreren Kühlkanälen zur Kühlung des Verteilkanals von aussen und/oder innen ausgebildet. Zur Ermittlung der Temperatur des Extrudats im Bereich des Verteilers kann ein Temperaturfühler vorgesehen sein, der vorzugsweise in die Wandung derart eingelassen ist, dass er den Fluss des Extrudats im Wesentlichen nicht behindert. Je nach gemessener Temperatur kann die Kühlung gesteuert und/oder geregelt werden, zum Beispiel durch die Anpassung der Kühlmitteltemperatur und/oder die Fliessgeschwindigkeit des Kühlmittels.

Erfindungsgemäss bevorzugt ist im Bereich des dem Extruder abgewandten und/oder des dem Extruder zugewandten Endes des Verteilers eine erfindungsgemässe Blende angeordnet, mit welcher der Verteilkanal verengt ist.

Gemäss der vorliegenden Erfindung können einstückige Kühlwerkzeuge, vorzugsweise Kühldüsen, aber auch modular aufgebaute Kühlwerkzeuge, vorzugsweise Kühldüsen verwendet werden. Bei einem modularen Kühlwerkzeug ist das Kühlwerkzeug in Abschnitte (Module) aufgeteilt, welche miteinander kombiniert werden können, um ein Kühlwerkzeug mit gewünschter Dimension zu erhalten. Derartige modular aufgebaute Kühlwerkzeuge, vorzugsweise Kühldüsen, sind bekannt und kommerziell erhältlich.

Gemäss einer bevorzugten Ausführungsform der vorliegenden Erfindung ist mindestens zwischen zwei Modulen eine erfindungsgemässe Blende angeordnet. Diese Blende kann zusätzlich zu einer erfindungsgemässen Blende angeordnet sein, welche im Bereich des dem Extruder abgewandten und/oder des dem Extruder zugewandten Endes des Verteilers angeordnet ist und den Verteilkanal verengt.

Gemäss einer weiteren bevorzugten Ausführungsform der vorliegenden Erfindung ist zwischen allen Modulen eine erfindungsgemässe Blende angeordnet.

Die zusätzlich zwischen Modulen eines Kühlwerkzeugs angeordneten erfindungsgemässen Blenden können identisch oder voneinander verschieden sein. Auf diese Weise können spezifische Produkteigenschaften eingestellt werden, welche durch wiederholtes Führen des Extrudats durch erfindungsgemässe Blenden erreicht werden.

Die vorliegende Erfindung betrifft weiterhin einen Nahrungs- bzw. Futtermittelextruder, umfassend ein vorstehend beschriebenes Kühlwerkzeug.

Extruder sind allgemein bekannt. Es wird beispielsweise auf die WO 2012/158023 A1 oder auf die Extruder, insbesondere Doppelschneckenextruder, von Bühler verwiesen. Solche Extruder haben vorzugsweise ein L/D-Verhältnis (Gesamtlänge zu Schneckendurchmesser) im Bereich von 20 bis 60, vorzugsweise 25 bis 50, besonders bevorzugt 25 bis 40. Erfindungsgemäß werden die Extruder vorzugsweise mit 100 bis 1000 U/min, besonders bevorzugt mit 200 bis 600 U/min und besonders bevorzugt mit 250 bis 350 U/min betrieben.

Ein geeigneter Extruder umfasst mindestens eine Einheit zum Einbringen von Rohstoffen in einen ersten Abschnitt des Extruders. Sollen unterschiedliche Rohstoffe in den Extruder eingebracht werden, können auch mehrere solcher Einheiten vorgesehen sein. Der Extruder verfügt typischerweise auch über eine Wasser-, eine Öl- und gegebenenfalls eine Dampfzufuhrleitung.

Der Extruder umfasst mehrere Abschnitte, sogenannte Barrels, in denen das Material mit Hilfe mindestens einer rotierenden Extruderwelle verarbeitet und gefördert wird. Die in den verschiedenen Barrels verwendeten, auf der Extruderwelle angeordneten Schneckenelemente können gleich sein, sind aber vorzugsweise unterschiedlich, um unterschiedliche Verarbeitungsbedingungen in den Barrels zu schaffen.

Gemäß einer bevorzugten Ausführungsform der vorliegenden Erfindung umfasst der Extruder 4 bis 10, vorzugsweise 4 bis 8 Barrels. Die erforderliche Anzahl von Barrels hängt von der Mischung der zu verarbeitenden Rohstoffe ab.

Das Gehäuse des Extruders ist vorzugsweise temperaturgesteuert. Die Zusammensetzung wird unter Druck (üblicherweise 1 bis 60 bar, vorzugsweise 8 bis 20 bar, besonders bevorzugt 10 bis 15 bar) geknetet, um eine homogene Mischung zu bilden. Dabei wird in der Regel ein Energieaufwand von 10 bis 150 Wh/kg, vorzugsweise 10 bis 120 Wh/kg, besonders bevorzugt 15 bis 30 Wh/kg, betrieben.

Die vorliegende Erfindung betrifft weiterhin ein Verfahren zur Herstellung von proteinhaltigen Lebensmitteln, umfassend die Schritte
a) Eindosieren von Rohstoffen in einen Extruder, wobei mindestens ein Rohstoff ein Protein ist, vorzugsweise ein pflanzliches Protein,
b) Mischen der Rohstoffe im Extruder zur Erzeugung einer Mischung,
c) Extrudieren der Mischung zur Erzeugung eines Extrudats,
d) Herausführen des Extrudats aus dem Extruder durch ein Kühlwerkzeug unter Abkühlung des Extrudats auf eine Temperatur von weniger als 100°C,
dadurch gekennzeichnet, dass das Extrudat im Schritt d) durch eine erfindungsgemässe Blende geführt wird.

Extrusionsverfahren zur Herstellung von proteinhaltigen Lebensmitteln sind hinlänglich bekannt. Beispielshaft sei auf die WO 2021/032866 A1 verwiesen.

Im Extruder wird das zu extrudierende Material wie vorstehend bereits beschrieben behandelt.

Gemäss einer bevorzugten Ausführungsform der vorliegenden Erfindung wird im Schritt d) das Extrudat mit einer spezifischen Flussrate im Bereich von 0,02 bis 2,5 kgh⁻¹mm⁻², vorzugsweise 0,03 bis 1,5 kgh⁻¹mm⁻², besonders bevorzugt 0,04 bis 0,5 kgh⁻¹mm⁻² durch die Blende geführt.

Das extrudierte Produkt kann aus der Kühldüse in eine weitere Verarbeitungseinheit geführt werden, beispielsweise in einen Schneidapparat, in welchen das Produkt auf eine gewünschte Dimension zugeschnitten werden kann. Derartige Schneidapparate sind bekannt.

Mit dem erfindungsgemässen Verfahren kann ein Produkt mit spezifischen Produkteigenschaften hergestellt werden.

Die vorliegende Erfindung betrifft somit auch ein Extrudat, erhältlich mit dem erfindungsgemässen Verfahren.

Vorzugsweise weist das Extrudat eine Härte im Bereich von 20 bis 30 N, bevorzugt 22 bis 27 N auf.

Weiterhin vorzugsweise weist das Extrudat eine Textur auf, welche einen Lockerungsgrad aufweist, der umgekehrt proportional zur Härte des Extrudats zunimmt.

Die vorliegende Erfindung wird nachstehend anhand von nicht einschränkenden bevorzugten Ausführungsformen und Zeichnungen näher erläutert. Es zeigen:
- Fig. 1A-D:: Ausführungsformen von erfindungsgemässen Blenden mit unterschiedlichen Öffnungsmustern sowie sich daraus ergebende Texturen eines durch die Blende extrudierten Produkts
- Fig. 1E:: Eine Textur eines Produkts, welches in einem Vergleichsbeispiel ohne Einsatz einer erfindungsgemässen Blende hergestellt wurde.
- Fig. 2:: Eine graphische Darstellung des Zusammenhangs zwischen der Fläche der offenen Bereiche von erfindungsgemässen Blenden und der Härte eines durch die Blenden extrudierten Produkts
- Fig. 3:: Ausführungsformen einer erfindungsgemässen Blende für eine Schlitzdüse mit verschiedenen offenen Bereichen
- Fig. 4:: eine Ausführungsform einer erfindungsgemässen Blende für eine Kühldüse mit ringförmigem Kühlkanal
- Fig. 5:: Eine schematische Darstellung einer Ausführungsform eines erfindungsgemässen Extruders
- Fig. 6:: Eine schematische Darstellung einer Ausführungsform einer modularen Kühldüse mit erfindungsgemässen Blenden

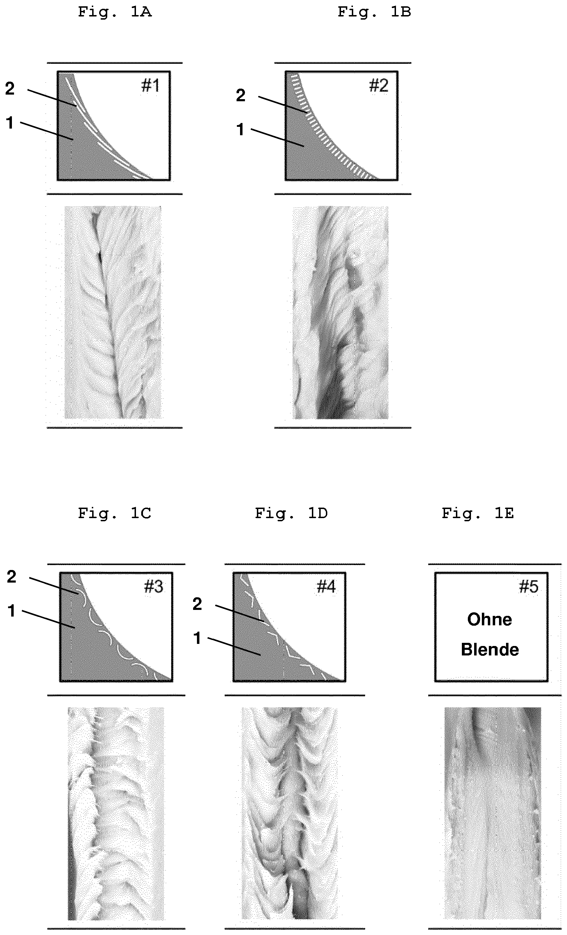

In Fig. 1A-D sind Ausführungsformen von erfindungsgemässen Blenden 1 mit unterschiedlichen Öffnungsmustern sowie sich daraus ergebende Texturen eines durch die Blende extrudierten Produkts dargestellt. Es handelt sich hierbei um Blenden für Kühldüsen mit ringförmigem Kühlkanal.

Es ist ersichtlich, dass die Form der offenen Bereiche 2 der Blenden einen Einfluss auf die Textur des hindurchgeführten Produkts hat.

In Fig. 1E ist ein Produkt dargestellt, welches in einem Vergleichsbeispiel ohne Einsatz einer erfindungsgemässen Blende hergestellt wurde. Es ist zu erkennen, dass das Produkt keine ausgeprägte Textur aufweist.

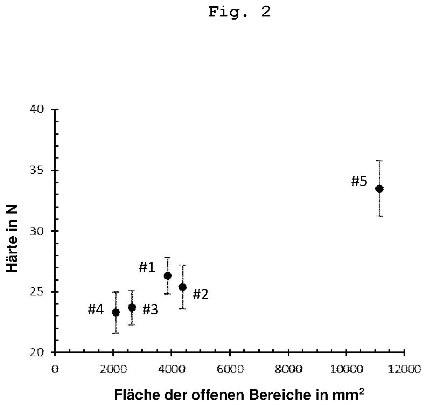

In Fig. 2 ist eine graphische Darstellung des Zusammenhangs zwischen der Fläche der offenen Bereiche von erfindungsgemässen Blenden und der Härte eines durch die Blenden extrudierten Produkts gezeigt. Die in Fig. 2 angegebenen Produktnummern sind mit den Nummern aus Fig. 1A-E identisch. In den Versuchen gemäss Fig. 2 wurde ein Extruder mit einer Kühldüse mit einem ringförmigen Kühlkanal verwendet, entsprechend der in der EP-3 524 059 B1 beschriebenen Kühldüse. Der Kühlkanal hatte eine Querschnittsfläche von 11153 mm².

Das Produkt Nr. 5 wurde gemäss Fig. 1E ohne Hindurchführen durch eine erfindungsgemässe Blende extrudiert. In diesem Fall war der offene Bereich des Kühlkanals 11153 mm², d.h. 100% der Querschnittsfläche des Kühlkanals.

In den Beispielen gemäss Fig. 1A-D wurde das Produkt durch eine erfindungsgemässe Blende mit offenen Bereichen von etwa 2000 bis 4400 mm² geführt, was etwa 18% bis 40% der Oberfläche der Blende entsprach.

Es ist zu erkennen, dass mit abnehmenden offenen Bereichen der Blende die Härte des durch die Blende geführten Produkts abnahm.

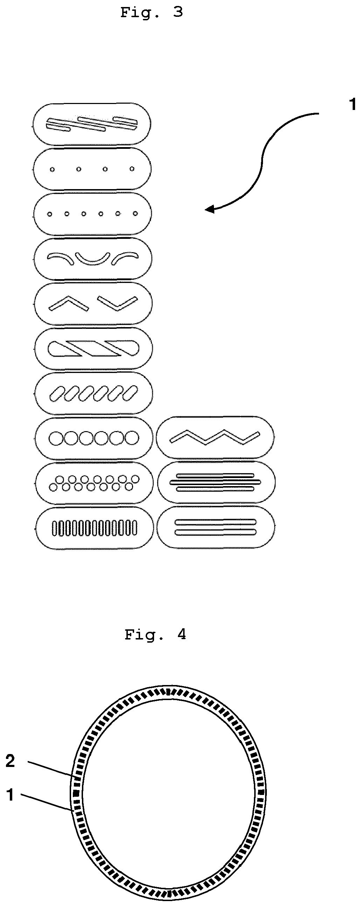

In Fig. 3 sind Ausführungsformen einer erfindungsgemässen Blende 1 für eine Schlitzdüse mit verschiedenen offenen Bereichen gezeigt. Diese Blenden 1 sind stadionförmig, um den Querschnitt des Kühlkanals einer Schlitzdüse einzuengen. Es ist zu erkennen, dass die Form der offenen Bereiche der erfindungsgemässen Blende nicht sonderlich eingeschränkt ist, aber wie in Fig. 1A-D gezeigt einen Einfluss auf die Textur des hindurchgeführten Produkts haben kann. Die Dimensionen der offenen Bereiche sind in Fig. 3 nicht massstabsgetreu und liegen im erfindungsgemässen Bereich von 10-50%, vorzugsweise 15-40%, der Oberfläche der Blende.

In Fig. 4 ist eine Ausführungsform einer erfindungsgemässen Blende 1 für eine Kühldüse mit ringförmigem Kühlkanal gezeigt. Die Blende 1 hat eine ringförmige Oberfläche mit Schlitzen als offenen Bereichen 2, welche 10-50%, vorzugsweise 15-40%, der Oberfläche der Blende ausmachen.

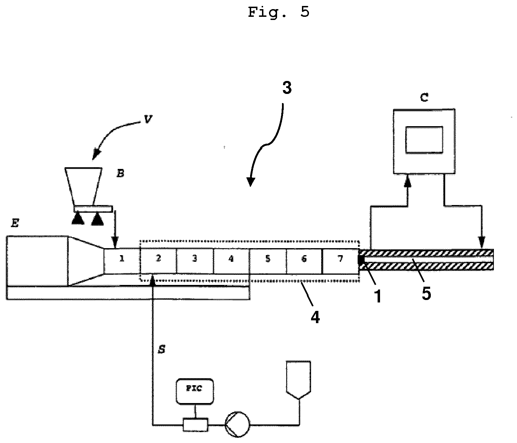

In Fig. 5 ist 3ine schematische Darstellung einer Ausführungsform eines erfindungsgemässen Extruders 3 gezeigt. Der Extruder umfasst Barrels 4 (hier mit den Nummern 1 bis 7 bezeichnet). Ein Rohstoff V wird über die gravimetrische Dosierung B zugeführt. Über eine Zuführung S wird Wasser oder Dampf hinzugeführt.

Das Kühlwerkzeug (die Kühldüse) 5 ist am Ausgang des Extruders 3 angeordnet. Das Kühlmedium wird bevorzugt an der stromabwärtigen Seite) in Flussrichtung des Extrudats aus dem Extruder zum Ausgang der Kühldüse) des Kühlwerkzeugs 5 zugeführt und an der stromaufwärtigen Seite des Kühlwerkzeugs 5 abgeführt. Die Strömungsrichtung des Kühlmediums ist somit der Fliessrichtung des Extrudats entgegengesetzt. Die Temperierung des Kühlmediums kann über eine Temperaturregelung justiert (gesteuert oder geregelt) werden, welche durch den Controller C bezeichnet ist.

Besonders bevorzugt ist die Temperaturregelung derart ausgebildet, dass die Expansion des gekühlten Extrudats kontrolliert, vorzugsweise im Wesentlichen vollständig unterbunden werden kann. Für bestimmte Produkte kann es jedoch auch sinnvoll und ermöglicht sein, eine gewisse Expansion des gekühlten Extrudats zuzulassen.

Eine erfindungsgemässe Blende 1 ist bei dieser Ausführungsform am Einlass der Kühldüse 5 angeordnet.

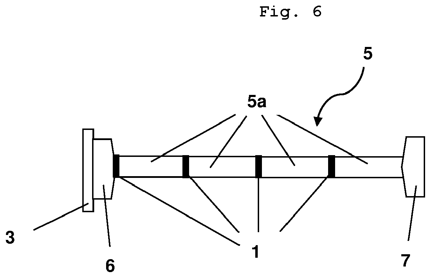

In Fig. 6 ist eine schematische Darstellung einer Ausführungsform einer modularen Kühldüse 5 mit erfindungsgemässen Blenden 1 gezeigt. Die Kühldüse 5 umfasst bei dieser Ausführungsform vier Module 5a. Bei dieser Ausführungsform ist zwischen allen benachbarten Modulen 5a jeweils eine Blende 1 angeordnet. Das Extrudate tritt aus einem Extruder 3 in einen Verteiler 6, in welchem das Extrudat in die (nicht gezeigten) Kühlkanäle der Kühldüse 5 eingeführt wird. Am Ende der Kühldüse 5 tritt das Extrudat in einen Schneidapparat 7.

Die erfindungsgemässen Blenden 1 können bei dieser Ausführungsform identisch oder voneinander verschieden sein. Weiterhin ist es möglich, eine zusätzliche Blende 1 am Ausgang des Verteilers 6 in die Kühldüse 5 anzuordnen.

## Patentansprüche

1. Blende (1) für ein Kühlwerkzeug (5) eines Nahrungs- bzw. Futtermittelextruders (3), wobei die Blende (1) in ihrer Oberfläche offene Bereiche (2) aufweist, durch welche ein Extrudat durch die Blende (1) hindurch treten kann, **dadurch gekennzeichnet, dass** die offenen Bereiche (2) 10-50%, vorzugsweise 15-40%, der Oberfläche der Blende (1) einnehmen.

2. Blende nach Anspruch 1, **dadurch gekennzeichnet, dass** die Blende (1) als Lochblende ausgebildet ist.

3. Blende nach Anspruch 1, **dadurch gekennzeichnet, dass** die Blende (1) als Blende mit segmentierten Schlitzen, die als Kreissegmente oder Ringsegmente ausgebildet sind, ausgebildet ist.

4. Blende nach einem der Ansprüche 1 bis 3, **dadurch gekennzeichnet, dass** die Blende (1) ein symmetrisches oder asymmetrisches Loch- oder Schlitzbild aufweist.

5. Blende nach einem der Ansprüche 1 bis 4, **dadurch gekennzeichnet, dass** die Blende (1) kreis- oder ringförmig ist.

6. Blende nach einem der Ansprüche 1 bis 4, **dadurch gekennzeichnet, dass** die Blende (1) stadionförmig ist.

7. Kühlwerkzeug (5) für einen Nahrungs- bzw. Futtermittelextruder (3), vorzugsweise Kühldüse, mit einer Blende (1) im Bereich eines Verteilkanals, wobei die Blende (1) den Verteilkanal verengt, **dadurch gekennzeichnet, dass** es sich um eine Blende gemäss einem der Ansprüche 1 bis 6 handelt.

8. Kühlwerkzeug nach Anspruch 7, **dadurch gekennzeichnet, dass** das Kühlwerkzeug (5) modular aufgebaut ist und mindestens zwischen zwei Modulen (5a) eine Blende (1) gemäss einem der Ansprüche 1 bis 6 angeordnet ist.

9. Kühlwerkzeug nach Anspruch 8, **dadurch gekennzeichnet, dass** das zwischen allen Modulen (5a) eine Blende (1) gemäss einem der Ansprüche 1 bis 6 angeordnet ist.

10. Nahrungs- bzw. Futtermittelextruder (3), umfassend ein Kühlwerkzeug (5) gemäss einem der Ansprüche 7 bis 9.

11. Verfahren zur Herstellung von proteinhaltigen Lebensmitteln, umfassend die Schritte
a) Eindosieren von Rohstoffen in einen Extruder (3), wobei mindestens ein Rohstoff ein Protein ist, vorzugsweise ein pflanzliches Protein,
b) Mischen der Rohstoffe im Extruder (3) zur Erzeugung einer Mischung,
c) Extrudieren der Mischung zur Erzeugung eines Extrudats,
d) Herausführen des Extrudats aus dem Extruder (3) durch ein Kühlwerkzeug (5) unter Abkühlung des Extrudats auf eine Temperatur von weniger als 100°C,
**dadurch gekennzeichnet, dass** das Extrudat im Schritt d) durch eine Blende (1) gemäss einem der Ansprüche 1 bis 6 geführt wird.

12. Verfahren nach Anspruch 11, **dadurch gekennzeichnet, dass** im Schritt d) das Extrudat mit einer spezifischen Flussrate im Bereich von 0,02 bis 2,5 kgh⁻¹mm⁻², vorzugsweise 0,03 bis 1,5 kgh⁻¹mm⁻², besonders bevorzugt 0,04 bis 0,5 kgh⁻¹mm⁻² durch die Blende (1) geführt wird.

13. Extrudat, erhältlich mit dem Verfahren nach Anspruch 11 oder 12.

14. Extrudat nach Anspruch 13, **dadurch gekennzeichnet, dass** das Extrudat eine Härte im Bereich von 20 bis 30 N, bevorzugt 22 bis 27 N aufweist.

15. Extrudat nach Anspruch 13 oder 14, **dadurch gekennzeichnet, dass** das Extrudat eine Textur aufweist, welche einen Lockerungsgrad aufweist, der umgekehrt proportional zur Härte des Extrudats zunimmt.
